# EUROPÄISCHE PATENTSCHRIFT

(11) **EP 0 475 165 B1**
(45) Veröffentlichungstag und Bekanntmachung des Hinweises auf die Patenterteilung: **02.11.1995**
(21) Anmeldenummer: 91114202.4
(22) Anmeldetag: 24.08.1991
(51) Int. Cl.: H04L 27/20

(54) **Verfahren zum Erzeugen eines mit einem Trägersignal überlagerten QPSK-Signals**
Method for producing a QPSK signal with a superposed carrier
Procédé de génération de signaux à quatre états de phase, avec une porteuse superposée

(30) Priorität: 11.09.1990 DE 4028791
(43) Veröffentlichungstag der Anmeldung: 18.03.1992
(73) Patentinhaber: ANT Nachrichtentechnik GmbH, D-71522 Backnang (DE)
(72) Erfinder: Alberty, Michael, Dipl.-Ing., W-7150 Backnang (DE); Steinert, Wolfgang, Dipl.-Ing., W-7150 Backnang (DE)

(56) Entgegenhaltungen:
- EP-A- 0 422 417
- FR-A- 2 154 306
- FR-A- 2 339 291
- US-A- 3 978 406
- ELECTRONICS. Bd. 39, 31. Oktober 1966, NEW YORK US Seiten 91 - 94; POPPE MARTIN: 'Double phase-shift keying speeds data over voice channels'
- PATENT ABSTRACTS OF JAPAN vol. 14, no. 82 (E-889)15. Februar 1990;& JP-A-1293723

## Beschreibung

Die vorliegende Erfindung betrifft ein Verfahren und eine Anordnung zum Erzeugen eines quadratur-phasenumgetasteten Signals (QPSK), wobei ein Trägersignal über zwei in Reihe angeordnete schaltbare Phasenschieber geführt wird, einer der beiden schaltbaren Phasenschieber durch eines von zwei Datensignalen angesteuert wird und beide Datensignale logisch miteinander verknüpft werden und von dem daraus entstehenden Verknüpfungssignal der andere schaltbare Phasenschieber angesteuert wird.

Ein derartiger QPSK-Modulator ist aus dem US Patent 3,978,406 und in ähnlicher Weise aus der älteren EP 0 422 417 bekannt.

Es soll nun ein QPSK-Signal erzeugt werden, dem ein zusätzliches Trägersignal überlagert ist. Dieses überlagerte Trägersignal kann z.B. die Funktion eines Bakensignals haben, das für die Antennennachführung auf der Empfangsseite einer Nachrichtenübertragungsstrecke genutzt wird.

Der Erfindung liegt daher die Aufgabe zugrunde, ein Verfahren und eine Anordnung der eingangs genannten Art anzugeben, die die Bildung eines von einem zusätzlichen Trägersignal überlagerten QPSK-Signal mit einem sehr geringen Schaltungsaufwand ermöglichen.

Erfindungsgemäß wird die Aufgabe durch die Merkmale des Anspruches 1 bzw. 2 gelöst. Eine vorteilhafte Ausbildung der Anordnung nach Anspruch 2 geht aus dem Unteranspruch hervor.

Zur Realisierung des der Erfindung zugrundeliegenden Verfahrens werden lediglich zwei phasenschieber und eine logische Schaltung benötigt.

Anhand eines in der Zeichnung dargestellten Ausführungsbeispiels wird nachfolgend die Erfindung näher erläutert. Es zeigen:
- Figur 1: eine Schaltungsanordnung zum Erzeugen eines QPSK-Signals mit einem überlagerten Träger,
- Figur 2: eine Phasenebene mit vier Signalzuständen und
- Figur 3: eine Wahrheitstabelle.

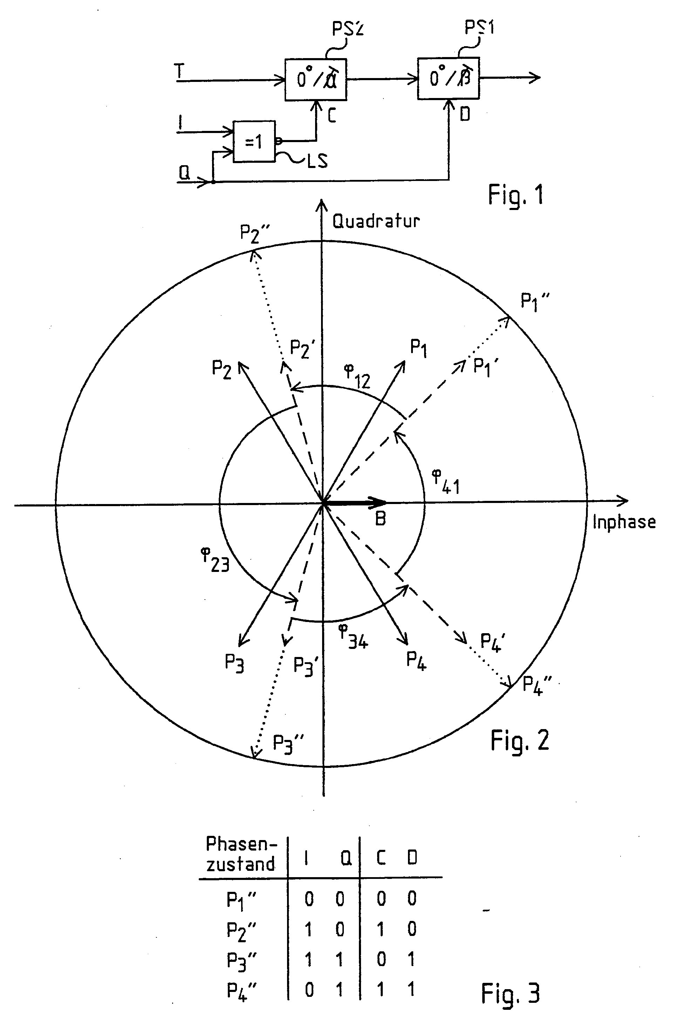

Bei der in Figur 1 dargestellten Schaltungsanordnung wird ein Trägersignal T mit seiner gesamten Leistung über zwei in Reihe angeordnete schaltbare Phasenschieber PS1 und PS2 geführt. Der eine der beiden Phasenschieber kann zwischen dem Phasenzustand 0° und einem Phasenzustand β und der andere Phasenschieber PS2 zwischen dem Phasenstand 0° und einem Phasenzustand α umgetastet werden. Jedem dieser beiden Phasenschieber PS1 und PS2 wird ein Steuersignal C, D zugeführt. Diese beiden Steuersignale C und D werden aus den Datensignalen I und Q für die Inphasen- bzw. Quadraturephasenkomponente abgeleitet. Als Steuersignal D für den die Phasenzustände 0° und β aufweisenden Phasenschieber PS1 wird in dem gezeigten Ausführungsbeispiel das Datensignal Q verwendet. Das Steuersignal C für den anderen in die Phasenzustände 0° und α umtastbaren Phasenschieber PS2 entsteht aus der logischen Verknüpfung der beiden Datensignale I und Q in einer dafür vorgesehenen logischen Schaltung LS. Welche Art von logischer Schaltung LS zu verwenden ist, hängt davon ab, bei welchen Bit-Kombinationen der Datensignale I und Q das aus deren Verknüpfung entstehende Steuersignal C den Phasenschieber PS2 in den einen oder in den anderen Phasenzustand umzuschalten hat.

Mit Hilfe der in Figur 2 dargestelltn Phasenebene soll die Bildung eines QPSK-Signals, dem ein zusätzliches Trägersignal - im folgenden als Bakensignal bezeichnet - überlagert ist, verdeutlicht werden. In der Phasenebene ist mit durchgehenden Linien der Phasenstern eines QPSK-Signals (ohne Datensignal) mit vier Signalzuständen P₁, P₂, P₃ und P₄ eingezeichnet. Bei diesem Beispiel handelt es sich um ein sogenanntes unbalanced QPSK (oder UQPSK)-Signal, dessen Inphasen- und Quadraturphasenkomponenten unterschiedliche Amplituden aufweisen. Wird nun diesem QPSK-Signal ein Bakensignal B überlagert, so verschieben sich alle Signalzustände P₁, P₂, P₃ und P₄ in die Richtung und um die Amplitude des Bakensignals B. Der dabei entstehende neue Phasenstern mit den neuen Signalzuständen P₁′, P₂′, P₃′ und P₄′ ist mit strichlierten Linien in der Phasenebene eingezeichnet. In dem dargestellten Beispiel ist das Bakensignal B in Richtung der positiven Abszisse (Inphase) der Phasenebene orientiert. Die Phasenlage des Bakensignals B kann aber um n · 90° (n = 0, 1, 2) gedreht sein.

Es ist festzustellen, daß sich durch die Überlagerung eines Bakensignals - und zwar in Abhängigkeit von dessen Phasenlage und Amplitude - die Phasenwinkel zwischen den einzelnen Signalzuständen gegenüber dem ursprünglichen (ohne Bakensignal) QPSK-Signal ändern. Umgekehrt bedeutet dies, daß sich eine bestimmte Wahl der Phasenwinkel φ₁₂, φ₂₃, φ₃₄ und φ₄₁ zwischen den Signalzuständen P₁′, P₂′, P₃′ und P₄′ wie die Überlagerung eines QPSK-Signals mit einem Bakensignal B einer bestimmten Amplitude und Phasenlage auswirkt.

Wie der Figur 2 zu entnehmen ist, besitzen die durch die Überlagerung des Bakensignals B entstandenen Signalzustände P₁′, P₂′, P₃′ und P₄′ zunächst unterschiedliche Amplituden. Bei vielen praktischen Anwendungen wird jedoch das so erzeugte Signal noch mit Hilfe eines Verstärkers auf den erforderlichen Sendepegel angehoben. Wegen des günstigeren Leistungsverbrauches wird dieser Verstärker bevorzugt in der Sättigung betrieben, was zu einem Angleichen der unterschiedlichen Amplituden führt. So ergeben sich am Ausgang des Sendeverstärkers die Signalzustände P₁˝, P₂˝, P₃˝ und P₄˝, welche durch entsprechende Verschiebungen (punktierte Linien) der Signalzustände P₁′, P₂′, P₃′ und P₄′ entstehen. Das Angleichen der Amplitudenunterschiede kann jedoch auch schon im Modulator erfolgen. Damit wird eine Realisierung des Modulators mit sehr geringem Schaltungsaufwand ermöglicht. Darüber hinaus werden bei der im folgenden beschriebenen Lösung Phasenfehler vermieden, die durch AM/PM-Konversion bei Austeuerung des Sendeverstärkers mit Signalen unterschiedlicher Amplitude entstehen.

Die Signalzustände P₁˝, P₂˝, P₃˝ und P₄˝ mit gleichen Amplituden und den die Überlagerung eines Bakensignals B mit einer gewünschten Amplitude und Phasenlage realisierenden Phasenwinkeln φ₁₂, φ₂₃, φ₃₄ und φ₄₁ zwischen den einzelnen Signalzuständen erzeugt die in Figur 1 dargestellte Schaltung auf folgende Weise. Der Signalzustand P₁˝ in der Phasenebene sei hier einem Trägersignal T zugeordnet, das durch die beiden Phasenschieber PS1 und PS2 keine Phasenverschiebung erfährt. In diesem Fall sind beide Phasenschieber PS1 und PS2 in den Phasenzustand 0° geschaltet. Es wird z.B. davon ausgegangen, daß die beiden Phasenschieber PS1 und PS2 jeweils ihren Phasenzustand 0° annehmen, wenn das anliegende Steuersignal D bzw. C eine logische "0" hat. Die Schaltung liefert also den in der Phasenebene mit P₁˝ gekennzeichneten Signalzustand, wenn beide Steuersignale C und D eine logische "0" haben. Erhält nun der Phasenschieber PS2 ein Steuersignal C mit einer logischen "1", so schaltet dieser in den Phasenzustand α = φ₁₂ um, und behält der Phasenschieber PS1 seinen Phasenzustand 0° bei (D=0), so erhält man den Signalzustand P₂˝, d.h. das Trägersignal T wird um α = φ₁₂ phasenverschoben. In der Phasenebene stellt sich das so dar, daß der das ursprüngliche Trägersignal repräsentierende Vektor, welcher vom Ursprung der Phasenebene ausgeht und im Punkt P₁˝ endet, um den Winkel α = φ₁₂ gedreht wird. Hat das Steuersignal C eine logische "0" und das Steuersignal D eine logische "1", so nimmt der Phasenschieber PS2 den Phasenzustand 0° und der Phasenschieber PS1 den Phasenzustand β = φ₁₂ + φ₂₃ an. Das über die beiden Phasenschieber PS1, PS2 geführte Trägersignal T erfährt somit eine Phasendrehung von φ₁₂ + φ₂₃. Durch diese Phasendrehung geht der ursprüngliche Signalzustand P₁˝ nun in den Signalzustand P₃˝ über. Haben beide Steuersignale C und D eine logische "1", so schaltet der Phasenschieber PS2 in den Phasenzustand α = φ₁₂ und der Phasenschieber PS1 in den Phasenzustand β = φ₁₂ + φ₂₃ um. Das Trägersignal T erfährt somit insgesamt eine Phasendrehung um 2 · φ₁₂ + φ₂₃ (mit φ₁₂ = φ₂₄). Daraus resultiert der Signalzustand P₄˝.

Die Wahrheitstabelle in Figur 3 zeigt eine mögliche Zuordnung zwischen den Datensignalen I und Q und den Steuersignalen C und D für die Phasenschieber PS1 und PS2. Dabei wird davon ausgegangen, daß als Steuersignal D für den Phasenschieber PS1 das Datensignal Q verwendet wird. Aus den einzelnen Bit-Kombinationen der Datensignale I und Q entstehen die in der Tabelle gemäß Figur 3 aufgeführten Bitwerte für das Steuersignal C durch Verknüpfung der beiden Datensignale I und Q in einer Antivalenzschaltung (EXOR) LS.

## Patentansprüche

1. Verfahren zum Erzeugen eines quadratur-phasenumgetasteten Signals (QPSK), wobei ein Trägersignal (T) über zwei in Reihe angeordnete schaltbare Phasenschieber (PS1, PS2) geführt wird, einer der beiden schaltbaren Phasenschieber (PS1, PS2) durch eines von zwei Datensignalen (I, Q) angesteuert wird und beide Datensignale (I, Q) logisch miteinander verknüpft werden und von dem daraus entstehenden Verknüpfungssignal (C) der andere schaltbare Phasenschieber (PS2) angesteuert wird,
dadurch gekennzeichnet,
daß die beliebig einstellbaren Phasenzustände, in die jeder der beiden Phasenschieber (PS1, PS2) geschaltet werden kann, so gewählt werden und aus den beiden Datensignalen (I, Q) ein solches Verknüpfungssignal (C) gebildet wird, daß mit den zur Verfügung stehenden Werten der beiden Datensignale (I, Q) das die beiden Phasenschieber (PS1, PS2) durchlaufende Trägersignal (T) in Phasenlagen gebracht wird, die sich durch Überlagerung eines zusätzlichen Trägersignals (B) in Abhängigkeit von dessen Phasenlage und Amplitude ergeben.

2. Anordnung zum Erzeugen eines quadratur-phasenumgetasteten Signals (QPSK), die für die Phasenumtastung eines Trägersignals (T) zwei in Reihe angeordnete jeweils in zwei verschiedene Phasenzustände schaltbare Phasenschieber (PS1, PS2) aufweist, wobei einer (PS1) der beiden Phasenschieber (PS1, PS2) von einem von zwei Datensignalen (I, Q) ansteuerbar ist und der andere Phasenschieber (PS2) von einem aus einer logischen Verknüpfung der beiden Datensignale (I, Q) hervorgehenden Verknüpfungssignal (C) ansteuerbar ist,
dadurch gekennzeichnet,
daß die Phasenzustände, in die jeder der beiden beliebig einstellbaren Phasenschieber (PS1, PS2) geschaltet werden kann, so gewählt sind und des Verknüpfungssignal (C) solche Zustände aufweist, daß mit den zur Verfügung stehenden Werten der beiden Datensignale (I, Q) das die beiden Phasenschieber (PS1, PS2) durchlaufende Trägersignal (T) in Phasenlagen gebracht werden kann, die sich durch Überlagerung eines zusätzlichen Trägersignals (B) in Abhängigkeit von dessen Phasenlage und Amplitude ergeben.

3. Anordnung nach Anspruch 2, dadurch gekennzeichnet, daß eine Antivalenzschaltung (LS) die beiden Datensignale (I, Q) bitweise miteinander verknüpft,
daß bei einer logischen "0" des Verknüpfungssignals (C) der von ihm gesteuerte schaltbare Phasenschieber (PS2) den Phasenzustand 0 und bei einer logischen "1" den anderen Phasenzustand (β) annimmt und
daß bei einer logischen "0" des den anderen schaltbaren Phasenschieber (PS1) steuernden Datensignals (Q) dieser den Phasenzustand "0" und bei einer logischen "1" dieses Datensignals (Q) den anderen Phasenzustand (α) annimmt.

## Claims

1. Method for producing a quadrature phase-shift keyed signal (QPSK), a carrier signal (T) being supplied via two switchable phase shifters (PS1, PS2) which are arranged in series, one of the two switchable phase shifters (PS1, PS2) being driven by one of two data signals (I, Q), and both data signals (I, Q) being logically linked to one another and the other switchable phase shifter (PS2) being driven by the logically linked signal (C) resulting therefrom, characterized in that the phase states, which can be set at random, into which each of the two phase shifters (PS1, PS2) can be switched are selected in such a manner, and a logically linked signal (C) is formed from the two data signals (I, Q) in such a manner that the carrier signal (T) which passes through the two phase shifters (PS1, PS2) is changed by means of the available values of the two data signals (I, Q) to phase angles which result by heterodyning an additional carrier signal (B) as a function of its phase angle and amplitude.

2. Arrangement for producing a quadrature phase-shift keyed signal (QPSK), which arrangement has two phase shifters (PS1, PS2), which are arranged in series and can in each case be switched into two different phase states, for the phase-shift keying of a carrier signal (T), it being possible to drive one (PS1) of the two phase shifters (PS1, PS2) from one of two data signals (I, Q), and it being possible to drive the other phase shifter (PS2) from a logically linked signal (C) which is produced by logically linking the two data signals (I, Q), characterized in that the phase states into which each of the two phase shifters (PS1, PS2), which can be set randomly, can be switched are selected such that, and the logically linked signal (C) has states such that the carrier signal (T) which passes through the two phase shifters (PS1, PS2) can be changed by means of the available values of the two data signals (I, Q) into phase angles which result by heterodyning an additional carrier signal (B) as a function of its phase angle and amplitude.

3. Arrangement according to Claim 2, characterized in that an exclusive-OR circuit (LS) logically links the two data signals (I, Q) to one another bit by bit, in that, in the event of the logically linked signal (C) being a logic "0", the switchable phase shifter (PS2) which is controlled by it assumes the phase state "0" and, in the event of a logic "1", assumes the other phase state (β), and in that, in the event of the data signal (Q) which controls the other switchable phase shifter (PS1) being a logic "0", this data signal (Q) assumes the phase state "0", and, in the case of a logic "1", this data signal (Q) assumes the other phase state (α).

## Revendications

1. Procédé de génération de signaux à quatre états de phase (QPSK), en faisant passer un signal de porteuse (T) par deux déphaseurs (PS1, PS2), commutables, en série, l'un des deux déphaseurs commutables (PS1, PS2) étant commandé par l'un des deux signaux de données (I, Q) et les deux signaux de données (I, Q) étant combinés suivant une combinaison logique pour donner un signal de combinaison (C) qui commande l'autre déphaseur commutable (PS2), caractérisé en ce qu'on choisit les états de phase, réglables de manière quelconque , dans lesquels on peut commuter les deux déphaseurs (PS1, PS2) et, à partir des deux signaux de données (I, Q), on forme un signal de combinaison (C) tel qu'avec les valeurs disponibles des deux signaux de données (I, Q), on mette le signal de porteuse (T) qui traverse les deux déphaseurs (PS1, PS2), dans des positions de phase qui résultent de la superposition d'un signal de porteuse (B) supplémentaire en fonction de la phase et de l'amplitude.

2. Dispositif pour générer un signal à quatre états de phase (QPSK) comportant, pour la commande de phase d'un signal de porteuse (T), deux déphaseurs commutables (PS1, PS2) dans deux états de phase différents, l'un des déphaseurs (PS1) parmi les deux déphaseurs (PS1, PS2) étant commandés par l'un des deux signaux de données (I, Q) et l'autre déphaseur (PS2) étant commandé par un signal de combinaison (C) résultant de la combinaison logique des deux signaux de données (I, Q), caractérisé en ce que :
on choisit les états de phase dans lesquels on peut commuter les deux déphaseurs (PS1, PS2) réglables de manière quelconque? et le signal de combinaison (C) présente des états tels qu'avec les deux signaux de données (I, Q), disponibles, le signal de porteuse (T) qui traverse les deux déphaseurs (PS1, SP2) peut être mis dans des positions de phase résultant de la superposition d'un signal de porteuse (B) supplémentaire en fonction de sa position de phase et de son amplitude.

3. Dispositif selon la revendication 2, caractérisé en ce qu'un circuit antivalent (LS) combine ensemble les deux signaux de données (I, Q),
et pour un signal de combinaison (C) correspondant à l'état logique "0", le déphaseur (PS2) commutable, commandé par ce signal? prend l'état de phase 0° et, pour un état logique "1", prend l'autre état de phase (β)
et pour un état logique "0" du signal de données (Q) commandant l'autre déphaseur commutable (PS1), celui-ci prend l'état de phase "0" et pour un état logique "1", ce signal de donnée (Q) prend l'autre état de phase (α)
